# EUROPÄISCHE PATENTSCHRIFT

(11) **EP 3 119 599 B1**
(45) Veröffentlichungstag und Bekanntmachung des Hinweises auf die Patenterteilung: **23.05.2018**
(21) Anmeldenummer: 15712527.9
(22) Anmeldetag: 17.03.2015
(51) Int. Cl.: B31F 1/28, B65D 65/40

(54) **FUNKTIONALISIERTE WELLPAPPE**
FUNCTIONALIZED CORRUGATED CARDBOARD
CARTON ONDULÉ FONCTIONNALISÉ

(30) Priorität: 19.03.2014 DE 102014003886
(43) Veröffentlichungstag der Anmeldung: 25.01.2017
(73) Patentinhaber: ROBA Group AG, CH-8274 Tägerwilen (CH)
(72) Erfinder: BAUERNFEIND, Roman, CH-8264 Lipperswil (CH)
(74) Vertreter: Kutzenberger Wolff & Partner
(86) Internationale Anmeldenummer: PCT/EP2015/000583
(87) Internationale Veröffentlichungsnummer: WO 2015/139833

(56) Entgegenhaltungen:
- GB-A- 2 096 052
- US-A- 3 346 105
- US-A- 4 286 006
- US-A- 4 940 612
- US-A- 5 575 418
- US-A- 5 848 748
- US-B1- 6 184 510

## Beschreibung

Die vorliegende Erfindung betrifft eine mehrwellige, funktionalisierte Wellpappe, die zumindest zwei Papierbahnen der Wellpappe durch unterschiedliche, funktionalisierte, mehrschichtige Kunststofffolie substituiert hat.

Eine Wellpappe ist üblicherweise aus mehreren Lagen Papier (Papierbahnen) aufgebaut, wobei zwischen zwei Außenlagen mindestens eine Wellenbahn angeordnet ist. Dabei weisen Wellpappen trotz geringem Eigengewicht eine hohe Stabilität auf, so dass sie insbesondere als Verpackungsmaterial in größerem Umfang Verwendung finden.

Des Weiteren ist die Isolation bei Verpackungen aus Wellpappe aufgrund der Struktur der Wellpappe sehr gut, da Wellpappeverpackungen eine vergleichsweise hohe Isolation sowohl gegen Kälte als auch Wärme gewähren. Dadurch kann der Schutz des Füllguts, insbesondere dessen Frische und Haltbarkeit, verbessert werden.

Nachteilig beim Einsatz von Wellpappe ist u.a., dass die Wellpappe gegen die Einwirkung von Feuchtigkeit geschützt werden muss, da sie sonst erweichen und ihre mechanische Festigkeit verlieren kann. Insbesondere beim Warentransport oder der Lagerung verpackter Ware ist es oftmals unvermeidbar, dass die Verpackungen mit Feuchtigkeit in Kontakt kommen. Zudem können Lebensmittel, wie z.B. Frischobst, Feuchtigkeit an die Wellpappeverpackung abgeben, was zu deren Erweichung führen kann.

Es sind daher im Stande der Technik bereits beschichtete Wellpappe beschrieben, bei der eine oder beide Außenlagen aus Papier mit einer Beschichtung aus Kunststoff, vorzugsweise einer Barrierebeschichtung, ausgestattet ist (sind) (vgl.US 5,848,748). Solche beschichteten Wellpappen können je nach Art der Kunststoffbeschichtung eine Barriere gegen Feuchtigkeit, Gase, Öle oder Fette aufweisen. Allerdings kann dies je nach Herstellungsprozess zu höheren Kosten führen, da in einem zusätzlichen Arbeitsschritt die Kunststoffbeschichtung auf eine oder mehrere dieser Papierbahnen aufgebracht werden muss.

Aus US 5,575,418 A ist außerdem eine mehrwellige, funktionalisierte Wellpappe bekannt, die eine Außenlage aus Papier durch funktionalisierte, mehrschichtige Kunststofffolie ersetzt hat. Eine solche Wellpappe weist, wenn überhaupt, nur eine monofunktionelle Barrierewirkung auf.

Weiterhin sind auch Verpackungen aus Wellpappe bekannt, deren Verpackungsmulde mit einer Kunststofffolieneinlage mit gegebenenfalls einer Barrierewirkung ausgestattet ist, was allerdings auch zu höheren Herstellungskosten führen kann.

Ein weiterer Nachteil der bekannten, einwelligen, beschichteten oder unbeschichteten Wellpappen besteht darin, dass sie nicht gerollt werden können und daher als Stapelbögen transportiert und auch verarbeitet werden müssen. Bei industrieellen, kontinuierlichen Prozessen ist jedoch die Verarbeitung von Stapelware, wie gestapelten Wellpappebögen, nachteilig, da keine fortlaufende Wellpappebahn zur Verfügung steht. Die Verarbeitung von Stapelware erhöht außerdem das Risiko von Ausschussware. In US 4,286,006 wurde versucht, die Flexibilität von Wellpappe zu verbessern, indem eine Außenlage durch ein flexibleres Material ersetzt wird. GB 2 096 052 offenbart eine mehrwellige funktionalisierte Wellpappe, wobei eine Außenlage der Wellpappe durch eine funktionalisierte, mehrschichtige Kunststofffolie ersetzt ist. Aufgabe der vorliegenden Erfindung war es daher, eine funktionalisierte Wellpappe zur Verfügung zu stellen, die die vorstehend beschriebenen Nachteile nicht aufweist. Erfindungsgemäß wird diese Aufgabe durch Bereitstellung einer mehrwelligen, funktionalisierten Wellpappe gelöst, die zumindest eine Außenlage und eine Zwischenlage der Wellpappe aus unterschiedlichen, funktionalisierten, mehrschichtigen, vorzugsweise flexiblen Kunststofffolien aufweist. Erfindungsgemäß weist die funktionalisierte Wellpappe keine durch ihren Querschnitt teilweise oder vollständig durchgehenden Öffnungen auf, was insbesondere für eine aus einer solchen funktionalisierten Wellpappe hergestellte Verpackung gilt.

Die erfindungsgemäße, funktionalisierte Wellpappe zeichnet sich dadurch aus, dass sie gegenüber den bekannten, beschichteten Wellpappen ein geringeres Gewicht aufweist, da erfindungsgemäß mehrere beschichtete Papierbahnen der Wellpappe durch eine funktionalisierte, mehrschichtige Kunststofffolie ersetzt sind. Dadurch werden überaschenderweise die mechanischen Eigenschaften dieser Wellpappe nicht nur nicht beeinträchtigt, sondern sogar vorteilhaft verbessert, wie z.B. die Reißfestigkeit und die Aufrollbarkeit.

Dementsprechend ist die erfindungsgemäße, mehrwellige, funktionalisierte Wellpappe rollbar und kann als Rollenware gelagert, transportiert und mit üblichen, kontinuierlichen Prozessen verarbeitet werden.

Im Gegensatz zu den vorstehend beschriebenen, bekannten Wellpappen, die nur eine kunststoffbeschichtete Papierbahn aufweisen, ist es bei der Entsorgung der erfindungsgemäßen, funktionalisierten Wellpappe möglich, die funktionalisierten, mehrschichtigen Kunststofffolien jeweils als eine Lage der erfindungsgemäßen, funktionalisierten Wellpappe einfach von der restlichen Wellpappe zu trennen, was eine separate Entsorgung erleichtert und ein separates Recycling der funktionalisierten, mehrschichtigen Kunststofffolien bzw. der restlichen Wellpappe ermöglicht.

Wie vorstehend bereits beschrieben, ist eine Wellpappe üblicherweise aus mehreren Lagen, Papierbahnen, aufgebaut. Wenn zwischen zwei Außenlagen eine Wellenbahn angeordnet ist, wird eine solche Wellpappe auch als geschlossene, einwellige Wellpappe bezeichnet. Wenn die Wellenbahn nur mit einer Außenlage verbunden ist, wird sie als offene, einwellige Wellpappe bezeichnet. "Geschlossene Wellpappe" bedeutet daher erfindungsgemäß, dass die funktionalisierte Wellpappe zwei Außenlagen aufweist und dementsprechend die Wellenbahnen der funktionalisierten Wellpappe dazwischen liegend und innenliegend sind. "Offene Wellpappe" bedeutet erfindungsgemäß, dass die funktionalisierte Wellpappe nur eine Außenlage aufweist und dementsprechend zumindest eine der Wellenbahnen der funktionalisierten Wellpappe außenliegend ist und somit nicht mit einer Außenlage abgedeckt ist.

In einer bevorzugten Ausführungsform ist die funktionalisierte Wellpappe geschlossen. In einer anderen bevorzugten Ausführungsform ist die funktionalisierte Wellpappe offen.

Bei den funktionalisierten, mehrwelligen Wellpappen sind bevorzugt bis zu drei Wellenbahnen jeweils durch eine Zwischenlage voneinander getrennt, so dass z.B. eine dreiwellige Wellpappe aus sechs Lagen (offene Wellpappe) oder sieben Lagen (geschlossene Wellpappe) besteht. Dabei sind die einzelnen Lagen der Wellpappe jeweils mit der Wellenbahn verklebt.

In einer bevorzugten Ausführungsform ist die erfindungsgemäße, funktionalisierte Wellpappe mehrwellig, vorzugsweise mindestens zweiwellig.

Erfindungsgemäß bevorzugt besteht zumindest eine Außenlage und zumindest eine Zwischenlage der erfindungsgemäßen, funktionalisierten Wellpappe aus einer mehrschichtigen Kunststofffolie.

Wenn eine offene, funktionalisierte Wellpappe vorliegt, deren Außenlage aus einer mehrschichtigen Kunststofffolie besteht, ist diese funktionalisierte Wellpappe vorteilhafterweise besonders gut rollbar, wobei beim Aufrollen entweder die Wellenbahn oder die die Außenlage bildende mehrschichtige Kunststofffolie die Außenseite der aufgerollten Rolle bilden kann. Gleichzeitig verfügt eine solche offene, funktionalisierte Wellpappe in Ausbreitungsrichtung der Wellen der Wellenbahn über eine hohe Biegesteifigkeit.

In einer bevorzugten Ausführungsform bestehen nur eine, mehrere oder alle Zwischenlagen und eine Außenlage oder ggf. beide Außenlagen aus einer mehrschichtigen, funktionalisierten Kunststofffolie.

Die Eigenschaften der funktionalisierten Wellpappe können außer durch die erfindungsgemäß zum Einsatz kommende, funktionalisierte, mehrschichtige Kunststofffolie auch noch durch Wahl der zur Anwendung kommenden Papiersorte, durch das Flächengewicht des Papiers der Papierbahnen, durch die Art der Welle der Wellenbahn oder der Anzahl der Wellenbahnen beeinflusst und so an unterschiedliche Verwendungszwecke angepasst werden.

Die Außenlagen, die Wellenbahnen und die vorhandenen Zwischenlagen können aus denselben oder unterschiedlichen Papiersorten bestehen. Erfindungsgemäß bevorzugt bestehen sie aus unterschiedlichen Papiersorten.

Bevorzugt haben die in der erfindungsgemäßen, funktionalisierten Wellpappe vorhandenen Papierbahnen ein Flächengewicht von 35 bis 350 g/m², bevorzugter von 65 bis 135 g/m², noch bevorzugter von 75 bis 125 g/m² auf. Die Papierbahnen können ggf. zu Dekorations- oder Informationszwecken bedruckt sein.

Zum Schutz vor Umwelteinflüssen, insbesondere vor Beeinträchtigungen durch den Einfluss von Feuchtigkeit, Ölen und Fetten können die Papierbahnen, die die Außenlage(n) und/oder, vorzugsweise bei offener Wellpappe, die äußere Wellenbahn bilden, über dem ggf. vorhandenen Druckbild eine Lackierung zum Schutz aufweisen. Geeignete Lacke und Methoden zum Aufbringen der Lacke sind dem Fachmann bekannt. Bevorzugt sind wässrige Dispersionslacke. Alternativ können die Papierbahnen mit einer dünnen Schicht basierend auf Paraffinen oder heißschmelzenden Kunststoffen ausgerüstet werden. Solche Beschichtungen oder Lackierungen sind keine mehrschichtigen, funktionalisierten Kunststofffolien, sondern nur einschichtig.

Bekannterweise wird Wellpappe je nach Wellengröße in Wellpappe mit Feinstwelle (F und G) bis Grobwelle (A) eingeteilt.

Die erfindungsgemäße, funktionalisierte Wellpappe umfasst mehrere Wellenbahnen, d.h. sie ist beispielsweise doppellwellig oder dreiwellig, wobei die einzelnen Wellenbahnen unterschiedliche Wellenprofile aufweisen können.

Eine funktionalisierte, mehrwellige Wellpappe kann nur ein oder mehrere Wellenprofile ausgewählt aus der Gruppe umfassend G, N, F, E, B, C und Kombinationen aus mindestens zwei Wellenprofilen, wie z.B. FE, EE und EB, aufweisen, wobei (F) oder (G) für eine Feinstwelle und (E) für eine Mikrowelle steht.

Die erfindungsgemäße, funktionalisierte Wellpappe kann auch bedruckt sein, um ggf. Produkt- und Verbraucherinformationen zu vermitteln oder um zur Dekoration zu dienen. Ein Druck kann auf einer oder beiden Außenlagen und/oder auf der Wellenbahn der funktionalisierten Wellpappe aufgebracht sein.

Wenn die erfindungsgemäße, funktionalisierte Wellpappe mehr als nur eine Außenlage und eine Zwischenlage aus einer mehrschichtigen Kunststofffolie aufweist, können diese Lagen der erfindungsgemäßen, funktionalisierten Wellpappe jeweils aus derselben, mehrschichtigen, funktionalisierten, vorzugsweise flexiblen Kunststofffolie bestehen.

Erfindungsgemäß bevorzugt bestehen zumindest eine Außenlage und eine Zwischenlage der erfindungsgemäßen funktionalisierten Wellpappe aus unterschiedlichen, mehrschichtigen, funktionalisierten Kunststofffolien.

In einer bevorzugten Ausführungsform können beide Außenlagen und eine Zwischenlage jeweils aus einer unterschiedlichen, mehrschichtigen, funktionalisierten, vorzugsweise flexiblen Kunststofffolie bestehen.

Sofern zumindest eine Außenlage und eine Zwischenlage der erfindungsgemäßen funktionalisierten Wellpappe aus unterschiedlichen, mehrschichtigen, funktionalisierten Kunststofffolien bestehen, ist es erfindungsgemäß bevorzugt, dass sich die Kunststofffolien im Aufbau und/oder in der Zusammensetzung und/oder der Dicke der Schichten oder in der Funktionalität unterscheiden.

Vorzugsweise weist die zum Einsatz kommende, funktionalisierte, mehrschichtige Kunststofffolie zumindest eine Barriereschicht gegen Gase, gegen Feuchtigkeit, gegen Migration von niedermolekularen Anteilen und/oder gegen Geschmacks- bzw. Geruchsbeeinträchtigung und/oder gegen Öle und Fette und/oder gegen Flüssigkeiten, insbesondere wässrige Flüssigkeiten, auf.

So kann erfindungsgemäß bevorzugt die funktionalisierte Wellpappe zumindest eine Außenlage aus einer funktionalisierten Kunststofffolie, die eine Barriereschicht gegen Feuchtigkeit aufweist, umfassen. In einer anderen bevorzugten Ausführungsform kann die eine Außenlage eine Barriereschicht gegen Feuchtigkeit und/oder die andere Außenschicht eine Barriereschicht gegen Gase aufweisen.

Bei der funktionalisierten, mehrwelligen Wellpappe kann wenigstens eine Zwischenlage und wenigstens eine Außenlage aus jeweils einer mehrschichtigen, funktionalisierten Kunststofffolie bestehen, wobei mindestens eine der Lagen durch eine funktionalisierte Kunststofffolie mit einer Barriere gegen Feuchtigkeit und mindestens eine andere Lage durch eine funktionalisierte Kunststofffolie mit einer Barriere gegen Gase, gegen Migration von niedermolekularen Anteilen und/oder gegen Geschmacks- bzw. Geruchsbeeinträchtigung oder gegen Öle und Fette und/oder gegen Flüssigkeiten ersetzt ist.

In einer weiteren bevorzugten Ausführungsform kann die funktionalisierte, mehrschichtige Kunststofffolie als Außenlage eine Absorptionsschicht für Flüssigkeiten und/oder eine Release-Schicht und/oder eine bedruckte Schicht mit Informationen und/oder zur Identifikation und/oder eine Dekorschicht und/oder eine Schicht zur Verbesserung der mechanischen Eigenschaften der Wellpappe aufweisen.

Erfindungsgemäß bevorzugt kann die funktionalisierte, mehrschichtige, vorzugsweise flexible Kunststofffolie, aus der jeweils eine oder beide Außenlagen der Wellpappe bestehen, eine Release-Schicht und/oder eine bedruckte Schicht mit Informationen und/oder zur Identifikation und/oder eine Dekorschicht und/oder eine Schicht zur Verbesserung der mechanischen Eigenschaften der Wellpappe aufweisen.

Ferner kann eine funktionalisierte, mehrschichtige Kunststofffolie, aus der eine Außenlage oder wenigstens eine Zwischenlage besteht, eine Absorptionsschicht für Flüssigkeiten und/oder eine Schicht zur Verbesserung der mechanischen Eigenschaften der Wellpappe aufweisen.

In einer erfindungsgemäß bevorzugten Ausführungsform kann die funktionalisierte Wellpappe zusätzlich Release-Eigenschaften aufweisen, ohne dass die funktionalisierte, mehrschichtige Kunststofffolie als Außenlage mit einer Release-Schicht versehen ist, wenn die funktionalisierte, mehrschichtige Kunststofffolie eine ausreichende Flexibilität aufweist, um sich der Wellenstruktur der Wellenbahn anzupassen. Dementsprechend weist die Oberfläche der funktionalisierten Wellpappe eine entsprechende Struktur auf, die Release-Eigenschaften aufweisen kann.

Vorzugsweise weist die zum Einsatz kommende, funktionalisierte, mehrschichtige Kunststofffolie keine geschäumte Schicht auf.

Erfindungsgemäß kann die funktionalisierte Wellpappe hitzebeständig und insbesondere Mikrowellen-beständig sein, sofern die mehrschichtige, funktionalisierte Kunststofffolie eine ausreichend hohe Temperaturbeständigkeit aufweist. Dazu sollte die funktionalisierte, mehrschichtige Kunststofffolie vorzugsweise einen Erweichungspunkt von über 150°C, bevorzugter über 160°C aufweisen.

Im Detail kann die zum Einsatz kommende, funktionalisierte, mehrschichtige Kunststofffolie vorzugsweise mindestens zwei und bis zu elf Schichten aufweisen. Erfindungsgemäß bevorzugt kann die funktionalisierte, mehrschichtige Kunststofffolie mindestens zwei, mindestens drei oder mindestens fünf Schichten aufweisen. Besonders bevorzugt kann die funktionalisierte mehrschichtige Kunststofffolie 3 bis 10 Schichten aufweisen.

Dabei kann diese zum Einsatz kommende, funktionalisierte, mehrschichtige Kunststofffolie vorzugsweise die Schichtfolge umfassend wenigstens die folgenden Schichten aus thermoplastischen Polymeren
(a) eine ggf. siegelbare oder mit einer Release-Beschichtung versehenen Schicht (a) als Außenschicht
ggf. (b) eine Haftvermittlerschicht (b)
(c) eine Funktionsschicht, vorzugsweise Barriereschicht (c)
ggf. (d) eine Haftvermittlerschicht (d)
(e) eine ggf. siegelbare Schicht (e) als Außenschicht.
aufweisen.

Die funktionalisierte, mehrschichtige Kunststofffolie als eine der Außenlagen der Wellpappe ist mit der Außenschicht (e) der Kunststofffolie, vorzugsweise mit der Wellenbahn, verbunden.

In einer weiteren bevorzugten Ausführungsform weist die funktionalisierte, mehrschichtige Kunststofffolie die Schichtfolge (b) - (d) zumindest zweifach auf, wobei die Schicht (a) und die Schicht (e) jeweils als Außenschicht vorliegen. Gemäß dieser Ausführungsform weist die funktionalisierte, mehrschichtige Kunststofffolie vorzugsweise mindestens zwei Funktionsschichten (c) auf, die dieselbe oder unterschiedliche Funktionalitäten aufweisen können.

Erfindungsgemäß bevorzugt wird die zum Einsatz kommende, mehrschichtige, funktionalisierte Kunststofffolie in Längs- und/oder Querrichtung in einem Reckverhältnis von mindestens 1 : 1,5, vorzugsweise mindestens 1:2, besonders bevorzugt 1 : 2 bis 1 : 4 gereckt, wodurch die Kunststofffolie eine besonders hohe Durchstoßfestigkeit aufweist.

Trotz dieser biaxialen Reckung weist die biaxial orientierte, funktionalisierte, erfindungsgemäß zum Einsatz kommende, mehrschichtige Kunststofffolie nur einen Schrumpfgrad von höchstens 5 %, vorzugsweise von ≤ 3 % auf, da sie nach der Reckung fixiert wird.

Bevorzugt beträgt die Gesamtdicke der erfindungsgemäß zum Einsatz kommenden, funktionalisierten Kunststofffolie 20 - 350 µm, bevorzugter 35 - 250 µm, noch bevorzugter 40 - 150 µm, am bevorzugtesten 80 - 250 µm und insbesondere 90 - 220 µm oder 100 - 200 µm.

Die funktionalisierte, mehrschichtige, erfindungsgemäß zum Einsatz kommende, Kunststofffolie umfasst bevorzugt eine transparente, opake oder undurchsichtige, ggf. gefärbte Schichtenfolge aus zwei gegebenenfalls mehrlagigen Heißsiegelschichten (a) und (e) basierend auf wenigstens einem thermoplastischen Polymeren, aus wenigstens einer vorzugsweise transparenten Schicht (c) aus wenigstens einem thermoplastischen Polymer mit einer bestimmten Funktionalität und gegebenenfalls aus notwendigen Haftvermittlerschichten (b) und (d) aus einem thermoplastischen Polymeren.

Wie bereits aufgeführt, weist die funktionalisierte, erfindungsgemäß zum Einsatz kommende, mehrschichtige Kunststofffolie vorzugsweise wenigstens eine Barriereschicht(c) auf, vorzugsweise eine Barriereschicht gegen Gase, wie Sauerstoff oder Wasserdampf, gegen Feuchtigkeit, gegen Migration von niedermolekularen Anteilen und/oder gegen Geschmacks- bzw. Geruchsbeeinträchtigung, wobei die Barriereschicht (c) ggf. jeweils über eine Haftvermittlerschicht (b) bzw. (d) mit den angrenzenden Schichten verbunden sein kann.

Bevorzugt weist die funktionalisierte, mehrschichtige, erfindungsgemäß zum Einsatz kommende Kunststofffolie eine Sauerstoffdurchlässigkeit gemäß DIN 53380-3 von unter 10,00 cm³/(m²·d·bar) bei 23°C und 50% r. F. auf. Bevorzugt beträgt die Sauerstoffdurchlässigkeit der funktionalisierten, mehrschichtigen Kunststofffolie höchstens 8 cm³/(m²·d·bar), bevorzugt höchstens 7 oder 6 cm³/(m²·d·bar), bevorzugter höchstens 5, 4 oder 3 cm³/(m²·d·bar), noch bevorzugter höchstens 2, 1 oder 0,5 cm³/(m²·d·bar), am bevorzugtesten höchstens 0,4, 0,3 oder 0,2 cm³/(m²·d·bar) und insbesondere höchstens 0,1, 0,09 oder 0,08 cm³/(m²·d·bar) (jeweils bei 23°C und 50% r. F.).

Erfindungsgemäß bevorzugt entspricht die Wasserdampfdurchlässigkeit der funktionalisierten, mehrschichtigen Kunststofffolie höchstens den vorstehend genannten Werten für die Sauerstoffdurchlässigkeit, wobei die Wasserdampfdurchlässigkeit gemäß DIN ISO 53 122 bestimmt wird.

Als funktionalisierte, mehrschichtige Kunststofffolie kann jede, insbesondere aus dem Bereich der Lebensmitteltechnik bekannte, thermoplastische Kunststofffolie mit dem vorstehend aufgeführten Aufbau zum Einsatz kommen.

Vorzugsweise weist die erfindungsgemäß zum Einsatz kommende, funktionalisierte, mehrschichtige Kunststofffolie als Schicht (a) bzw. Schicht (e) jeweils eine Schicht aus Polyolefinen basierend auf denselben oder verschiedenen thermoplastischen Polyolefinen, Olefin-Copolymeren oder deren Mischungen als siegelbare, vorzugsweise heißsiegelbare Schicht, und als ggf. vorhandene Haftvermittlerschicht (b) bzw. (d) jeweils eine Schicht basierend auf modifizierten, thermoplastischen Polyolefinen auf.

Wenn die Außenschichten (a) und (e) der funktionalisierten, erfindungsgemäß zum Einsatz kommenden, mehrschichtigen Kunststofffolie aus Polyolefinen aufgebaut sind, basieren diese jeweils, gleich oder verschieden, auf einem thermoplastischen Polyolefin, Olefin-Copolymer oder deren Mischung. Polyolefine und Olefin-Copolymere im Sinne der vorliegenden Erfindung sind bevorzugt ausgewählt aus der Gruppe umfassend Polyethylene (PE) - insbesondere Polyethylene niedriger Dichte zwischen 0,86 und 0,93 g/cm³ (LDPE), lineare Polyethylene niedriger Dichte zwischen 0,86 und 0,94 g/cm³ (LLDPE), die neben Ethylen als Comonomer ein oder mehrere α-Olefine mit mehr als 2 Kohlenstoffatomen enthalten, Polyethylene hoher Dichte zwischen 0,94 und 0,97 g/cm³ (HDPE) oder Copolymere von Ethylen mit einem α-Olefin mit ≥ 4 Kohlenstoffatomen (mPE); Polypropylene (PP), Polyisobutylene (PI), Polybutylene (PB) oder Ethylen-Propylen-Copolymere mit vorzugsweise 1-10 mol.-% Ethylen (EPC). Die Außenschichten können auch auf Olefin/Vinylcarbonsäure-Copolymeren oder Olefin/Vynylester-Copolymeren wie Ethylen-Acrylsäure-Copolymere (EAA), Ethylen-Methacrylsäure-Copolymere (EMAA), Ethylen-Vinylacetat-Copolymere mit vorzugsweise 60-99 mol.-% Ethylen (EVA) oder auf Olefin-Copolymeren, deren Moleküle über Ionenbindungen vernetzt sind oder auf Mischungen aus jeweils wenigstens zwei der vorstehend genannten Polymerarten bestehen.

In einer weiteren bevorzugten Ausführungsform weist die erfindungsgemäß zum Einsatz kommende, funktionalisierte Kunststofffolie eine Schicht (a) mit einer Release-Beschichtung basierend auf einem ausgehärteten Polysiloxan auf. Die entsprechend zum Einsatz kommenden Polysiloxane sowie für die Maßnahmen zur Aushärtung der Polysiloxane sind dem Fachmann bekannt.

In einer anderen bevorzugten Ausführungsform kann die Schicht (e) auf wenigstens einem Polyester oder wenigstens einem Copolyester, der bevorzugt ausgewählt ist aus der Gruppe umfassend Polyalkylenterephthalate wie Polyethylenterephthalate (PET, c-PET, a-PET) oder PBT und entsprechende Copolyester wie CoPET und CoPBT). Mit "PET" werden Polyethylenterephthalate bezeichnet, die durch Polykondensation von Ethylenglykol und Terephthalsäure hergestellt wurden. Ferner können amorphe PET (a-PET) und kristalline PET (c-PET) eingesetzt werden. Mit "CoPET" werden Copolyester bezeichnet, die neben Ethylenglykol und Terephthalsäure noch weitere Monomere, wie z.B. verzweigte oder aromatische Diole enthalten können. Mit "PBT" werden Polybutylenterephthalate bezeichnet. Bevorzugt weist der zum Einsatz kommende Polyester oder Copolyester eine intrinsische Viskosität von vorzugsweise 0,1 bis 2,0 dl/g, bevorzugter von 0,3 bis 1,5 dl/g, insbesondere von 0,6 bis 1,0 dl/g auf, wobei die Methoden zur Bestimmung der intrinsischen Viskosität dem Fachmann bekannt sind. Eine ausführliche Beschreibung von geeigneten PET, PBT, Polycarbonaten (PC) und Copolycarbonaten (CoPC) ist im Kunststoffhandbuch Band 3/1 - technische Thermoplaste: Polycarbonate, Polyacetale, Polyester, Celluloseester; Carl Hanser Verlag, 1992, offenbart, auf dessen entsprechenden Inhalt vollumfänglich Bezug genommen wird.

In einer erfindungsgemäß bevorzugten Ausführungsform kann, ggf. nach einer notwendigen Vorbehandlung, eine Metallisierung einer der Schichten, vorzugsweise einer Schicht basierend auf Polyester oder Copolyester, vorzugsweise mit Aluminium vorgenommen werden. Ebenso kann eine der Schichten, vorzugsweise eine Schicht basierend auf Polyester oder Copolyester, mit einer Metallfolie, vorzugsweise einer Aluminium-Folie, verbunden werden.

Erfindungsgemäß bevorzugt weist die funktionalisierte, mehrschichtige Kunststofffolie wenigstens eine Funktionsschicht (c)mit einer Barrierewirkung auf. Dem Fachmann sind geeignete Polymere bekannt, mit denen eine Barriere, insbesondere gegen Gase oder gegen einen Aromaverlust, gegen Migration von niedermolekularen Anteilen und/oder gegen eine Geschmacks- bzw. Geruchsbeeinträchtigung, oder gegen Feuchtigkeit und/oder gegen Öle und Fette bewirkt werden kann.

Erfindungsgemäß bevorzugt wird mit der Schicht (c) eine Barriere gegen Gase oder einen Aromaverlust, gegen Migration von niedermolekularen Anteilen und/oder gegen Geschmacks- bzw. Geruchsbeeinträchtigung erreicht, indem die Schicht (c) aus wenigstens einem thermoplastischen Polymeren ausgewählt aus der Gruppe umfassend Ethylen-Vinylalkohol-Copolymere, Polyvinylidenchloride, Vinylidenchlorid-Copolymere, Mischungen aus wenigstens zwei der genannten Polymeren und Mischungenen von wenigstens einem der genannten Polymeren mit einem Ethylen-Vinylacetat-Copolymeren. Bevorzugte Vinylidenchlorid-Copolymere weisen ≥ 80 mol% Vinylidenchlorid aufgebaut wird.

In einer anderen bevorzugten Ausführungsform bewirkt die Schicht (c) aufgebaut aus einem thermoplastischen, aliphatischen oder (teil-) aromatischen Polyamid oder Copolyamid oder deren Mischungen eine Barriere gegen Feuchtigkeit und/oder Ölen und Fetten.

Als Polyamide (PA) und Copolyamide (CoPA) ikönnen für die Schicht (c) bevorzugt aliphatische oder (teil-)aromatische Polyamide, vorzugsweise mit einen Schmelzpunkt im Bereich von 160 bis 240°C, bevorzugter von 170 bis 220°C eingesetzt werden. Bevorzugt sind aliphatische Polyamide, wobei wenigstens ein Polyamid oder Copolyamid zur Herstellung der Schicht (c) ausgewählt aus der Gruppe umfassend PA 4, PA 6, PA 7, PA 8, PA 9, PA 10, PA 11, PA 12, PA 4,2, PA 6,6, PA 6,8, PA 6,9, PA 6,10, PA 6,12, PA 7,7, PA 8,8, PA 9,9, PA 10,9, PA 12,12, PA 6/6,6, PA 6,6/6, oder teilaromatische Polyamide wie PA6T und PA6I verwendet werden kann. PA 6 ist besonders bevorzugt. Eine ausführliche Beschreibung von Polyamiden und Copolyamiden findet sich im Kunststoff-Handbuch Band VI, Polyamide, Carl Hanser Verlag München, 1966; und Melvin I. Kohan, Nylon Plastics Handbook, Carl Hanser Verlag München, 1995, auf dessen entsprechender Inhalt vollumfänglich Bezug genommen wird.

In einer weiteren bevorzugten Ausführungsform kann die Funktionsschicht (c) als Absorptionsschicht für vorzugsweise Flüssigkeiten, besonders bevorzugt für wässerige Flüssigkeiten, aus einem superabsorbierenden Polymeren aufgebaut sein.

Als superabsorbierende Polymeren kommen bevorzugt Polymere aus Acrylsäure und mindestens einem ihrer Alkalisalze zum Einsatz.

Erfindungsgemäß bevorzugt kann eine Außenlage der erfindungsgemäßen, funktionalisierten Wellpappe durch eine solche funktionalisierte, mehrschichtige Kunststofffolie ersetzt sein.

Die funktionalisierte, erfindungsgemäße Wellpappe weist weder eine Kunststofffolie mit einer geschäumten Schicht, noch eine einschichtige, geschäumte Folie oder eine geschäumte Einlage auf.

Die genannten Barriereschichten (c) sind bevorzugt über Haftverttlerschichten (b) und (d) mit den weiteren Schichten der erfindungsgemäß zum Einsatz kommenden Kunststofffolie verbunden.

Dafür kann die funktionalisierte, mehrschichtige Kunststofffolie bevorzugt eine oder mehrere Haftvermittlerschichten (b) und (d) aufweisen.

Geeignete thermoplastische Polymere, die als Haftvermittlermaterialien eingesetzt werden können, sind dem Fachmann bekannt. Bevorzugt basieren die Haftvermittlerschichten (b) und (d), gleich oder verschieden, auf einem vorzugsweise modifizierten Polyolefin und/oder Olefin-Copolymeren, vorzugsweise ausgewählt aus der Gruppe umfassend mit Carboxylgruppen oder cyclischen Anhydridgruppen modifizierte Polyethylene, Polypropylene, insbesondere mit Maleinsäureanhydrid-Gruppen modifizierte Polyethylene, Polypropylene und Ethylen-Vinylacetat-Copolymere. Bevorzugt sind Maleinsäureanhydrid-modifizierte PE, mit COOH-Gruppen modifizierte PE, mit Carboxylgruppen modifizierte Copolymere von Ethylenvinylacetat oder von Ethylen(meth)acrylat, mit cyclischen Anhydridgruppen modifizierte Ethylen-Vinylacetat-Copolymere oder Polymermischungen enthaltend mindestens zwei der vorstehend genannten Polymere. Mit Maleinsäureanhydrid modifizierte Copolymere sind besonders bevorzugt.

In einer weiteren bevorzugten Ausführungsform umfasst die erfindungsgemäß zum Einsatz kommende, mehrschichtige, funktionalisierte Kunststofffolie eine Schichtenfolge aus:
(a) einer ggf. Siegelschicht, vorzugsweise ggf. heißsiegelbaren Schicht (a), aufgebaut aus wenigstens einem thermoplastischen Olefin-Homo- oder Copolymeren oder deren Mischungen ggf. mit einer Release-Beschichtung als Außenschicht,
(b) einer Haftvermittlerschicht (b),
(f) einer Schicht (f) aufgebaut aus wenigstens einem Homo- und/oder Copolyamid,
(c) einer Funktionsschicht, vorzugsweise Barriereschicht (c),
(f) einer weiteren Schicht (f) aufgebaut aus wenigstens einem Homo- und/oder Copolyamid,
(d) einer weiteren Haftvermittlerschicht (d),
ggf. (g) einer Schicht (g) aufgebaut aus wenigstens einem thermoplastischen Olefin-Homo- oder Copolymeren oder deren Mischungen oder aus wenigstens einem Homo- oder Copolyamid oder deren Mischungen, und
(e) einer ggf. siegelbaren, vorzugsweise ggf. heißsiegelbaren Außenschicht (e) aufgebaut aus wenigstens einem thermoplastischen Olefin-Homo- oder Copolymeren oder deren Mischungen.

Die Barriereschicht (c) grenzt bevorzugt jeweils an eine Zwischenschicht (f) an. Diese Zwischenschichten (f) schützen die Barriereschicht (c), wenn notwendig, gegen den Einfluss von Feuchtigkeit und gegen eine Schädigung beim Thermoformen.

Bevorzugt basieren die Zwischenschichten (f) auf Homo- und/oder Copolyamiden wie vorstehend beschrieben.

Bevorzugt basieren die ggf. vorhandene Schicht (g) auf thermoplastischen Olefin-Homo- oder Copolymeren oder deren Mischungen oder aus wenigstens einem Homo- oder Copolyamid oder deren Mischungen, wobei die entsprechenden Polymeren bereits vorstehend in Zusammenhang mit den für die Schichten (a), (c) und (e) geeigneten Polymeren beschrieben wurden.

In einer bevorzugten Ausführungsform kann die erfindungsgemäß zum Einsatz kommende, mehrschichtige, funktionalisierte Kunststofffolie eine Schichtfolge (b), (f), (c), (f), (d) und ggf. (g) zweifach neben der Schicht (a) und die Schicht (e) als Außenschichten aufweisen.

Gemäß dieser weiteren bevorzugten Ausführungsform ist die erfindungsgemäß zum Einsatz kommende, funktionalisierte, mehrschichtige Kunststofffolie siegelfähig, hochtransparent, hat höchstens einen Rückschrumpf von <5%, und kann eine Barriere gegen Gase, wie Sauerstoff oder Wasserdampf, gegen Feuchtigkeit, gegen Migration von niedermolekularen Anteilen und/oder gegen Geschmacks- bzw. Geruchsbeeinträchtigung, aufweisen. Dementsprechend kann sie bevorzugt zur Funktionalisierung einer Wellpappe eingesetzt werden, die u.a. für Lebensmittelverpackungen verwendet wird.

Zur Herstellung der erfindungsgemäßen, funktionalisierten Wellpappe wird die funktionalisierte, mehrschichtige Kunststofffolie mit der Wellenbahn verbunden. Vorzugsweise erfolgt diese Verbindung durch Kleben oder Heißsiegeln der Schicht (e) der Kunststofffolie auf die Wellenbahn.

Wenn die Verbindung durch Verklebung der funktionalisierten Kunststofffolie mit den jeweiligen Wellenbergen bzw. Wellentälern einer Wellenbahn erfolgt, kann ein Kleber auf Basis von Mais-, Weizen- oder Kartoffelstärke oder eine Kombination daraus vorzugsweise eingesetzt werden.

Wenn die funktionalisierte mehrschichtige Kunststofffolie als Außenschicht (e) und/oder (a) eine siegelbaren Schicht aufweist, kann die Kunststofffolie mit Hilfe der Schicht (e) oder (a) mit den Wellenbergen bzw. Wellentälern der Wellenbahn bevorzugt durch Versiegeln, vorzugsweise unter Wärme, verbunden werden.

In einer besonders bevorzugten Ausführungsform ist die erfindungsgemäß zum Einsatz kommende, funktionalisierte Wellpappe
- offen oder geschlossen; und
- zweiwellig; und
- weist die mindestens eine Wellenbahn mit einem N-, F-, E-, B-, C-Profil oder mindestens 2 Wellenbahnen mit einem Kombinationsprofil wie FE-, EE- und EB-Profil auf; und
- weist mindestens eine der Außenlagen aus einer funktionalisierten, mehrschichtigen Kunststofffolie auf; und
- weist die funktionalisierte, mehrschichtige Kunststofffolie einen Schichtaufbau aus (a), ggf. (b), (c), ggf. (d) und (e) auf; und
- weist die funktionalisierte, mehrschichtige Kunststofffolie als Schicht (c) mit einer Barriere gegen Gase, gegen Feuchtigkeit, gegen Migration von niedermolekularen Anteilen und/oder gegen Geschmacks- bzw. Geruchsbeeinträchtigung und/oder gegen Öle und Fette und/oder gegen Flüssigkeiten auf; und
- hat die funktionalisierte, mehrschichtige Kunststofffolie eine Dicke von zwischen 90 bis 220 µm; und
- umfasst die funktionalisierte, mehrschichtige Kunststofffolie Schichten aus PE, PA und/oder EVOH.

Erfindungsgemäß besonders bevorzugt wird die funktionalisierte Wellpappe als Verpackungsmaterial, u.a. zur Herstellung von Verpackungsmulden, von geschlossenen Behältern oder von Bechern eingesetzt.

Sofern Verpackungsmulden aus der erfindungsgemäßen, funktionalisierten Wellpappe hergestellt werden, kann die Öffnung der Verpackungsmulde mehreckig, bevorzugt dreieckig, rechteckig, quadratisch, oder rund sein. Die Seitenwände der Verpackungsmulde können üblicherweise mehr oder weniger konisch auf den Boden zulaufen, wodurch die Verpackungsmulde besser stapelbar ist.

Zur Herstellung der Verpackungsmulde wird zunächst ein Zuschnitt aus der funktionalisierten Wellpappe mit Hilfe eines Stanzwerkzeugs ausgestanzt und erfindungsgemäß bevorzugt durch Falten aufgerichtet.

Nach dem Falten kann die Verpackungsmulde durch Form- und/oder Kraftschluss in ihrer gefalteten Struktur fixiert werden. Vorzugsweise wird die Verpackungsmulde aus einem planen Zuschnitt hergestellt, indem die Seitenwände hochgeklappt und miteinander verklebt werden. Die Seitenwände stehen vorzugsweise nicht senkrecht auf dem Boden sondern sind so angeordnet, dass sich der Querschnitt der Verpackungsmulde von oben nach unten verjüngt.

In einer bevorzugten Ausführungsform wird die Verpackungsmulde durch Falten (Aufrichten) geformt, wobei bevorzugt durch Laschenklebung, vorzugsweise mit einem Dispersionskleber, die Struktur fixiert wird. Dem Fachmann sind geeignete Dispersionskleber zur Laschenklebung bekannt.

Wenn die funktionalisierte Wellpappe offen ist, besteht die Außenlage aus einer funktionalisierten Mehrschichtfolie, die vorzugsweise zur Innenseite der Verpackungsmulde gerichtet ist.

Wenn beide Außenlagen der funktionalisierten Wellpappe jeweils aus einer funktionalisierten Mehrschichtfolie bestehen, die jeweils als von der Wellenbahn abgewandten Seite als Außenschicht (a) eine heißsiegelbare Schicht aufweisen, kann die gefaltete Struktur erfindungsgemäß bevorzugt durch Heißsiegeln, vorzugsweise im Bereich der Laschen, fixiert werden. Gemäß dieser Ausführungsform ist es ferner erfindungsgemäß bevorzugt, die offenen Kanten zwischen den Seitenwänden der Verpackungsmulde durch Wärmeeinwirkung zu Versiegeln. Dabei werden die jeweils der Muldeninnenseite zugewandten heißsiegelbaren Außenschichten (a) der jeweils benachbarten Seitenwände entlang der gemeinsamen Innenkante miteinander verbunden.

Die vorzugsweise so hergestellten Verpackungsmulden können mit einem Deckel, der vorzugsweise siegelbar ist, durch Heißsiegeln verschlossen werden. Der Deckel ist erfindungsgemäß bevorzugt eine siegelbare Kunststofffolie oder weist eine zur Mulde gerichtete, siegelfähige Schicht auf, so dass der Deckel mit der Mulde vorzugsweise durch Heißsiegeln verbunden werden kann. Je nach Gestaltung der Mulde kann die Siegelung mit der Deckelfolie auf dem ggf. vorhandenen äußeren Flanschrand der Mulde erfolgen, wobei in diesem Falle die zur Innenseite der Mulde gerichtete Außenlage der funktionalisierten Wellpappe aus einer funktionalisierten, siegelfähigen mehrschichtigen Kunststofffolie besteht. Sofern die an der Muldenaußenseite angeordnete Außenlage der funktionalisierten Wellpappe aus einer funktionalisierten mehrschichtigen, siegelfähigen Kunststofffolie besteht, kann die Versiegelung auch auf der Muldenaußenseite erfolgen.

Vorzugsweise ist der Deckel aus einer mehrschichtige Kunststofffolie, die vorzugsweise mindestens eine Barriereschicht gegen Gase, gegen Feuchtigkeit, gegen Migration von niedermolekularen Anteilen und/oder gegen Geschmacks- bzw. Geruchsbeeinträchtigung und/oder gegen Öle und Fette und/oder gegen Flüssigkeiten aufweist. Der Aufbau einer solchen Deckelfolie kann die vorstehend beschriebenen Schichtenfolge (a), ggf. (b), (c), ggf. (d) und (e) umfassen.

Um die Produktqualität - wie Frische und Farbe - möglichst optimal zu erhalten und die Haltbarkeit zu verlängern, können die Produkte in einer Verpackungsmulde aus funktionalisierter Wellpappe und einem vorstehend beschriebenen Deckel, vorzugsweise unter Schutzgasatmosphäre verpackt werden, um eine möglichst lange Haltbarkeit des verpackten Gutes zu erreichen.

Sofern ein einteiliger, geschlossener Behälter aus der erfindungsgemäßen, funktionalisierten Wellpappe hergestellt wird, wird auch ein Deckelelement aufweisender Zuschnitt aus der funktionalisierten Wellpappe vorzugsweise mit Hilfe eines Stanzwerkzeugs ausgestanzt und erfindungsgemäß bevorzugt durch Falten aufgerichtet.

Die Aufrichtung und anschließende Fixierung erfolgt vorzugsweise wie bereits vorstehend im Zusammenhang mit der Herstellung der Verpackungsmulde offenbart.

Nach der Aufrichtung, Fixierung und Befüllung kann der Behälter mit dem Deckelelement vollständig geschlossen werden, wobei das Deckelement ggf. stoffschlüssig mit den Seitenwänden der Behältermulde verbunden werden kann, wobei ggf. zum leichteren Öffnen der so erhaltenen geschlossenen Verpackung durch den Endverbraucher ein Aufreißstreifen eingesetzt werden kann.

Solche vollständig schließbaren Kartons kommen vorzugsweise zur Verpackung von Waschmittel und anderen Schüttgütern zum Einsatz.

In einer anderen bevorzugten Ausführungsform kann aus der funktionalisierten Wellpappe ein Becher, z.B. für Joghurt, hergestellt werden. Dazu werden vorzugsweise aus der funktionalisierten Wellpappe je nach Gestaltung ein oder mehrere Zuschnitte mit Hilfe eines Stanzwerkzeugs ausgestanzt und erfindungsgemäß bevorzugt durch Falten aufgerichtet.

Die Aufrichtung und anschließende Fixierung erfolgt vorzugsweise wie bereits vorstehend im Zusammenhang mit der Herstellung der Verpackungsmulde offenbart.

Der Becher weist vorzugsweise einen umlaufenden Flanschrand auf und kann mit einem Deckel, wie vorstehend im Zusammenhang mit der Verpackungsmulde bereits beschrieben, vorzugsweise durch Heißsiegeln verschlossen werden.

Vorzugsweise sind die aus der erfindungsgemäßen funktionalisierten Wellpappe hergestellten Verpackungen für Güter jeder Art, vorzugsweise Lebensmittel, Genussmittel, Tierfutter, medizinische Produkte und Waschmittel, in fester oder flüssiger, vorzugsweise fester Form geeignet. Besonders bevorzugt sind aus der erfindungsgemäßen funktionalisierten Wellpappe hergestellte Verpackungen für rohe oder gegarte Lebensmittel wie Obst und Gemüse, Fleisch und Fisch, Fleischwaren wie Schinken oder Wurst, Fertiggerichte, Tiefkühlkost, Tierfutter, Trockenpulver jeder Art, feste Milchprodukte, Süßigkeiten wie Schokoladenprodukte, Teigwaren, medizinische Produkte, Waschmittel, Joghurt, Flüssigkeiten, wie Milch, Fruchtsäfte, Wasser und Wein, und Dekorationsartikel geeignet.

Weitere bevorzugte Verpackungen aus der erfindungsgemäßen funktionalisierten Wellpappe sind Umverpackungen für Transporte, Überseeverpackungen, insbesondere als Schutz gegen Feuchtigkeit.

Die einzelnen Bestandteile bzw. Materialien, Beschichtungen, Farben usw. der erfindungsgemäßen funktionalisierten Wellpappe werden jeweils so gewählt, dass die Verpackung den jeweiligen Anforderungen des Füllgutes entsprechen, wie z.B. Lebensmitteltauglichkeit für die Verpackung von Lebensmitteln und Genusswaren gewährleistet wird.

Verpackungen aus der erfindungsgemäßen funktionalisierten Wellpappe können ggf. sterilisierbar, pasteurisierbar und/oder mikrowellengeeignet sein.

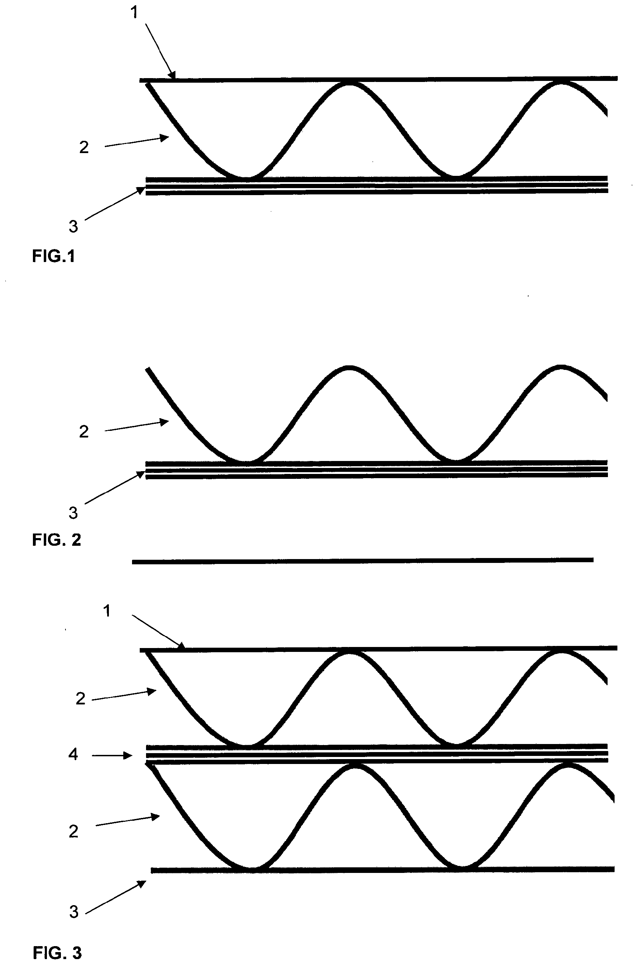

### Bezugszeichenliste der Figuren 1 bis 3

- 1: Außenlage aus Papier
- 2: Wellenbahn aus Papier
- 3: Außenlage aus funktionalisierter, mehrschichtiger Kunststofffolie
- 4: Zwischenlage aus funktionalisierter, mehrschichtiger Kunststofffolie

Figur 1, nicht erfindungsgemäß, zeigt eine geschlossene, einwellige, erfindungsgemäße Wellpappe, die aus der Außenlage 1 aus Papierbahn und der Außenlage 3 aus einer funktionalisierten, mehrschichtigen Kunststofffolie und einer dazwischen angeordneten Wellenbahn 2 aus einer Papierbahn aufgebaut ist. Die Außenlage 1 grenzt mit ihrer inneren Oberfläche an die Wellenbahn 2, mit der sie im Bereich der Wellenberge durch Verkleben verbunden ist. Mit ihrer Schicht (a) grenzt die funktionalisierte, mehrschichtige Kunststofffolie als Außenlage 3 an die Wellenbahn 2 und ist in diesem Bereich mit den Wellentälern der Wellenbahn 2 durch Heißsiegeln verbunden.

Figur 2, nicht erfindungsgemäß, zeigt eine funktionalisierte, offene Wellpappe, die aus der Wellenbahn 2 aus Papierbahn und einer daran angrenzenden Außenlage 3 aufgebaut ist. Als Außenlage 3 grenzt die funktionalisierte Kunststofffolie mit ihrer siegelbaren Schicht (a) an die Wellenbahn 2 aus Papierbahn und ist mit dieser durch Heißsiegeln der Schicht a) verbunden.

Figur 3 zeigt eine erfindungsgemäße zweiwellige Wellpappe, die aus zwei Wellenbahnen 2, einer Außenlage 1 aus einer Papierbahn, einer Außenlage 3 aus einer funktionalisierten, mehrschichtigen Kunststofffolie und einer Zwischenlage 4 aus einer funktionalisierten, mehrschichtigen Kunststofffolie aufgebaut ist. Die Wellenbahn 2 grenzt an die Außenlage 1 und die Zwischenlage 4, die über das Heißsiegeln der siegelbaren Schicht (a) der funktionalisierten, mehrschichtigen Kunststofffolie mit der Zwischenlage 4 im Bereich der Wellentäler verbunden ist. Mit der zweiten Oberfläche grenzt die funktionalisierte, mehrschichtige Kunststofffolie als Zwischenlage 4 an die zweite Wellenbahn 2 und ist mit dieser im Bereich der Wellenberge über die heißsiegelbare Schicht (e) der funktionalisierten, mehrschichtigen Kunststofffolie durch Heißsiegeln verbunden. Mit ihrer inneren Oberfläche grenzt die Außenlage 3 an die zweite Wellenbahn 2 an und ist mit dieser im Bereich der Wellentäler durch Heißsiegeln der Schicht (a) der funktionalisierten, mehrschichtigen Kunststofffolie als Außenlage 3 verbunden.

## Patentansprüche

1. Eine mehrwellige, funktionalisierte Wellpappe, **dadurch gekennzeichnet, dass** zumindest eine Außenlage (3) und eine Zwischenlage (4) der Wellpappe aus unterschiedlichen, mehrschichtigen, funktionalisierten Kunststofffolien bestehen.

2. Eine mehrwellige, funktionalisierte Wellpappe nach Anspruch 1, **dadurch gekennzeichnet, dass** sich die funktionalisierten, mehrschichtigen Kunststofffolien im Aufbau und/oder in der Zusammensetzung der Schichten und/oder der Dicke der Schichten oder in ihrer Funktionalität unterscheiden.

3. Eine mehrwellige, funktionalisierte Wellpappe nach Anspruch 1 oder 2, **dadurch gekennzeichnet, dass** die funktionalisierten, mehrschichtigen Kunststofffolien zumindest eine Schicht als Barriere gegen Gase, gegen Feuchtigkeit, gegen Migration von niedermolekularen Anteilen oder gegen Geschmacks- bzw. Geruchsbeeinträchtigung oder gegen Öle und Fette oder gegen Flüssigkeiten aufweisen.

4. Eine mehrwellige, funktionalisierte Wellpappe nach einem der Ansprüche 1 bis 3, **dadurch gekennzeichnet, dass** die funktionalisierte, mehrschichtige Kunststofffolie als eine Außenlage (3) der Wellpappe eine Absorptionsschicht für Flüssigkeiten, eine Außenschicht mit einer Release-Beschichtung, eine bedruckte Schicht mit Informationen und/oder Identifikation, eine Dekorschicht und/oder eine Schicht zur Verbesserung der mechanischen Eigenschaften der Wellpappe aufweist.

5. Eine mehrwellige, funktionalisierte Wellpappe nach einem der Ansprüche 1 bis 4, **dadurch gekennzeichnet, dass** sie rollbar ist.

6. Eine mehrwellige, funktionalisierte Wellpappe nach einem der Ansprüche 1 bis 5, **dadurch gekennzeichnet, dass** die funktionalisierten, mehrschichtigen Kunststofffolien eine Schichtfolge umfassend wenigstens die Schichten
(a) eine ggf. siegelbare oder mit einer Release-Beschichtung ausgerüstete Schicht (a) als Außenschicht
ggf. (b) eine Haftvermittlerschicht (b)
(c) eine Funktionsschicht (c)
ggf. (d) eine Haftvermittlerschicht (d)
(e) eine ggf. siegelbare Schicht (e) als Außenschicht.
aufweisen.

7. Eine mehrwellige, funktionalisierte Wellpappe nach Anspruch 6, **dadurch gekennzeichnet, dass** die funktionalisierten, mehrschichtigen Kunststofffolien als siegelbare, vorzugsweise heißsiegelbare Schicht (a) bzw. Schicht (e) jeweils eine Polyolefin-Schicht basierend auf gleichen oder verschiedenen thermoplastischen Polyolefinen, Olefin-Copolymeren oder deren Mischungen und als ggf. vorhandene Haftvermittlerschicht (b) bzw. (d) jeweils eine Schicht basierend auf modifizierten, thermoplastischen Polyolefinen aufweist.

8. Eine mehrwellige, funktionalisierte Wellpappe nach einem der Ansprüche 6 oder 7, **dadurch gekennzeichnet, dass** die Schicht (c) als eine Barriere gegen Gase oder Aromaverlust, gegen Migration von niedermolekularen Anteilen und/oder gegen Geschmacks- bzw. Geruchsbeeinträchtigung auf einem thermoplastischen Polymeren ausgewählt aus der Gruppe umfassend Ethylen-/Vinylalkohol-Copolymere, Polyvinylidenchlorid, Vinylidenchlorid-Copolymeren und jeweils einer Mischung mit Ethylen-Vinylacetat-Copolymeren basiert.

9. Eine mehrwellige, funktionalisierte Wellpappe nach einem der Ansprüche 6 oder 7, **dadurch gekennzeichnet, dass** die Funktionsschicht (c) als Barriere gegen Feuchtigkeit oder gegen Fette und Öle auf wenigstens einem thermoplastischen, aliphatischen oder (teil-) aromatischen Polyamid oder wenigstens einem Copolyamid oder deren Mischungen basiert.

10. Eine mehrwellige, funktionalisierte Wellpappe nach einem der Ansprüche 6 oder 7, **dadurch gekennzeichnet, dass** die Funktionsschicht (c) auf einem superabsorbierenden Polymeren, vorzugsweise für Flüssigkeiten, besonders bevorzugt für wässerige Flüssigkeiten, basiert.

11. Eine mehrwellige, funktionalisierte Wellpappe nach einem der Ansprüche 6 bis 10, **dadurch gekennzeichnet, dass** die funktionalisierten, mehrschichtigen Kunststofffolien eine Schichtfolge (b) - (d) zumindest zweifach, neben den Schichten (a) und (e) als Außenschichten aufweist.

12. Eine mehrwellige, funktionalisierte Wellpappe nach einem der Ansprüche 1 bis 11, **dadurch gekennzeichnet, dass** die Gesamtdicke der funktionalisierten, mehrschichtigen Kunststofffolie 35 - 350 µm beträgt.

13. Eine mehrwellige, funktionalisierte Wellpappe nach einem der Ansprüche 1 bis 12, **dadurch gekennzeichnet, dass** die Wellpappe nur eine oder mehrere Wellenprofile ausgewählt aus der Gruppe umfassend (G), (N), (F), (E), (B), (C) und Kombinationen aus mindestens 2 Wellenprofilen aufweist.

## Claims

1. Functionalized corrugated cardboard having a plurality of corrugations, **characterized in that** at least one external ply (3) and one intermediate ply (4) of the corrugated cardboard consist of different, multilayer, functionalized plastics films.

2. Functionalized corrugated cardboard having a plurality of corrugations according to Claim 1, **characterized in that** the functionalized, multilayer plastics films differ in structure and/or in the composition of the layers, and/or in the thickness of the layers, or in their functionality.

3. Functionalized corrugated cardboard having a plurality of corrugations according to Claim 1 or 2, **characterized in that** the functionalized, multilayer plastics films have at least one layer as barrier in respect of gases, in respect of moisture, in respect of migration of low-molecular-weight fractions, or in respect of impairment relating to taste or relating to odor, or in respect of oils and fats, or in respect of liquids.

4. Functionalized corrugated cardboard having a plurality of corrugations according to any of Claims 1 to 3, **characterized in that** the functionalized, multilayer plastics film, as an external ply (3) of the corrugated cardboard, has an absorption layer for liquids, and/or has an external layer with a release coating, and/or has a printed layer with information and/or identification, and/or has a decorative layer, and/or has a layer for improving the mechanical properties of the corrugated cardboard.

5. Functionalized corrugated cardboard having a plurality of corrugations according to any of Claims 1 to 4, **characterized in that** it can be rolled.

6. Functionalized corrugated cardboard having a plurality of corrugations according to any of Claims 1 to 5, **characterized in that** the functionalized, multilayer plastics films have a layer sequence comprising at least the following layers:
(a) as external layer, a layer (a) which is optionally sealable or has a release coating
optionally (b) an adhesion-promoter layer (b)
(c) a functional layer (c)
optionally (d) an adhesion-promoter layer (d)
(e) as external layer, an optionally sealable layer (e).

7. Functionalized corrugated cardboard having a plurality of corrugations according to Claim 6, **characterized in that** the functionalized, multilayer plastics films have, as sealable, preferably heat-sealable layer (a) and, respectively, layer (e), in each case a polyolefin layer based on identical or different thermoplastic polyolefins, olefin copolymers, or a mixture of these and, as optionally present adhesion-promoter layer (b) and, respectively, (d), in each case a layer based on modified, thermoplastic polyolefins.

8. Functionalized corrugated cardboard having a plurality of corrugations according to Claim 6 or 7, **characterized in that** the layer (c), as barrier in respect of gases or aroma loss, in respect of migration of low-molecular-weight fractions, and/or in respect of impairment relating to taste or relating to odor is based on a thermoplastic polymer selected from the group comprising ethylene-vinyl alcohol copolymers, polyvinylidene chloride, vinylidene chloride copolymers, and in each case a mixture with ethylene-vinyl acetate copolymers.

9. Functionalized corrugated cardboard having a plurality of corrugations according to Claim 6 or 7, **characterized in that** the functional layer (c), as barrier in respect of moisture or in respect of fats and oils, is based on at least one thermoplastic, aliphatic, or (semi)aromatic polyamide or on at least one copolyamide, or a mixture of these.

10. Functionalized corrugated cardboard having a plurality of corrugations according to Claim 6 or 7, **characterized in that** the functional layer (c) is based on a polymer that is superabsorbent, preferably in respect of liquids, particularly preferably in respect of aqueous liquids.

11. Functionalized corrugated cardboard having a plurality of corrugations according to any of Claims 6 to 10, **characterized in that** the functionalized, multilayer plastics films have a layer sequence (b) - (d) at least twice, alongside the layers (a) and (e) as external layers.

12. Functionalized corrugated cardboard having a plurality of corrugations according to any of Claims 1 to 11, **characterized in that** the total thickness of the functionalized, multilayer plastics film is from 35 to 350 um.

13. Functionalized corrugated cardboard having a plurality of corrugations according to any of Claims 1 to 12, **characterized in that** the corrugated cardboard has only one or a plurality of corrugation profile(s) selected from the group comprising (G), (N), (F), (E), (B), (C) and combinations of at least two corrugation profiles.

## Revendications

1. Carton ondulé fonctionnalisé multi-cannelure, **caractérisé en ce qu'**au moins une couche extérieure (3) et une couche intermédiaire (4) du carton ondulé sont constituées par des films plastiques fonctionnalisés multicouches différents.

2. Carton ondulé fonctionnalisé multi-cannelure selon la revendication 1, **caractérisé en ce que** les films plastiques multicouches fonctionnalisés diffèrent au niveau de la structure et/ou de la composition des couches et/ou de l'épaisseur des couches ou de leur fonctionnalité.

3. Carton ondulé fonctionnalisé multi-cannelure selon la revendication 1 ou 2, **caractérisé en ce que** les films plastiques multicouches fonctionnalisés comprennent au moins une couche en tant que barrière contre les gaz, contre l'humidité, contre la migration de fractions de faible poids moléculaire ou contre les troubles de goût et d'odeur ou contre les huiles et les matières grasses ou contre les liquides.

4. Carton ondulé fonctionnalisé multi-cannelure selon l'une quelconque des revendications 1 à 3, **caractérisé en ce que** le film plastique multicouche fonctionnalisé en tant que couche extérieure (3) du carton ondulé comprend une couche d'absorption pour les liquides, une couche extérieure comprenant un revêtement anti-adhérent, une couche imprimée contenant des informations et/ou une identification, une couche décorative et/ou une couche pour l'amélioration des propriétés mécaniques du carton ondulé.

5. Carton ondulé fonctionnalisé multi-cannelure selon l'une quelconque des revendications 1 à 4, **caractérisé en ce qu'**il est enroulable.

6. Carton ondulé fonctionnalisé multi-cannelure selon l'une quelconque des revendications 1 à 5, **caractérisé en ce que** les films plastiques multicouches fonctionnalisés comprennent une succession de couches comprenant au moins les couches suivantes :
(a) une couche (a) éventuellement scellable ou munie d'un revêtement anti-adhérent en tant que couche extérieure,
éventuellement (b) une couche de promoteur d'adhésion (b),
(c) une couche fonctionnelle (c),
éventuellement (d) une couche de promoteur d'adhésion (d),
(e) une couche (e) éventuellement scellable en tant que couche extérieure.

7. Carton ondulé fonctionnalisé multi-cannelure selon la revendication 6, **caractérisé en ce que** les films plastiques multicouches fonctionnalisés comprennent en tant que couche (a) et couche (e) scellable, de préférence thermoscellable, à chaque fois une couche de polyoléfine à base de polyoléfines thermoplastiques, de copolymères d'oléfines ou leurs mélanges identiques ou différents, et en tant que couche de promoteur d'adhésion (b) et (d) éventuellement présente, à chaque fois une couche à base de polyoléfines thermoplastiques modifiées.

8. Carton ondulé fonctionnalisé multi-cannelure selon l'une quelconque des revendications 6 ou 7, **caractérisé en ce que** la couche (c) en tant que barrière contre les gaz ou les pertes d'arômes, contre la migration de fractions de faible poids moléculaire et/ou contre les troubles de goût et d'odeur est à base d'un polymère thermoplastique choisi dans le groupe comprenant les copolymères d'éthylène/alcool vinylique, le polychlorure de vinylidène, les copolymères de chlorure de vinylidène, et à chaque fois d'un mélange avec un copolymère d'éthylène-acétate de vinyle.

9. Carton ondulé fonctionnalisé multi-cannelure selon l'une quelconque des revendications 6 ou 7, **caractérisé en ce que** la couche fonctionnelle (c) en tant que barrière contre l'humidité ou contre les matières grasses et les huiles est à base d'au moins un polyamide thermoplastique, aliphatique ou (partiellement) aromatique ou d'au moins un copolyamide ou leurs mélanges.

10. Carton ondulé fonctionnalisé multi-cannelure selon l'une quelconque des revendications 6 ou 7, **caractérisé en ce que** la couche fonctionnelle (c) est à base d'un polymère superabsorbant, de préférence pour les liquides, de manière particulièrement préférée pour les liquides aqueux.

11. Carton ondulé fonctionnalisé multi-cannelure selon l'une quelconque des revendications 6 à 10, **caractérisé en ce que** les films plastiques multicouches fonctionnalisés comprennent une succession des couches (b) à (d) au moins à deux reprises, en plus des couches (a) et (e) en tant que couches extérieures.

12. Carton ondulé fonctionnalisé multi-cannelure selon l'une quelconque des revendications 1 à 11, **caractérisé en ce que** l'épaisseur totale du film plastique multicouche fonctionnalisé est de 35 à 350 µm.

13. Carton ondulé fonctionnalisé multi-cannelure selon l'une quelconque des revendications 1 à 12, **caractérisé en ce que** le carton ondulé comprend uniquement un ou plusieurs profils de cannelure choisis dans le groupe comprenant (G), (N), (F), (E), (B), (C) et les combinaisons d'au moins 2 profils de cannelure.
